(19) Europäisches Patentamt
European Patent Office
Office européen des brevets

(11) **EP 2 105 195 A1**

(12) **EUROPEAN PATENT APPLICATION**

(43) Date of publication:
**30.09.2009 Bulletin 2009/40**

(21) Application number: **08016266.2**

(22) Date of filing: **16.09.2008**

(51) Int Cl.:
*B01D 53/86* (2006.01)  *B01J 23/58* (2006.01)
*B01J 35/00* (2006.01)  *B01J 35/04* (2006.01)
*B01J 37/02* (2006.01)

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **27.03.2008 PCT/JP2008/055970**

(71) Applicant: **Ibiden Co., Ltd.**
**Ogaki-shi, Gifu 503-8604 (JP)**

(72) Inventors:
• **Ohno, Kazushige**
**Ibi-gun**
**Gifu 501-0695 (JP)**

• **Ido, Takahiko**
**Ibi-gun**
**Gifu 501-0695 (JP)**

(74) Representative: **HOFFMANN EITLE**
**Patent- und Rechtsanwälte**
**Arabellastrasse 4**
**81925 München (DE)**

Remarks:
A request for correction of the description has been filed pursuant to Rule 139 EPC. A decision on the request will be taken during the proceedings before the Examining Division (Guidelines for Examination in the EPO, A-V, 3.).

(54) **Honeycomb structure**

(57)     A honeycomb structure is provided that includes one or more pillar honeycomb units each including inorganic particles and an inorganic binder and having multiple cells separated by cell walls, the cells extending from one end face to another end face of each of the honeycomb units along a longitudinal direction thereof, the honeycomb structure being **characterized in that** each of the cell walls supports a noble metal catalyst and a NOx occluding catalyst so that the amount of the noble metal catalyst is greater on the surface of the cell wall than in the center part of the thickness of the cell wall.

FIG.4

**Description**

BACKGROUND OF THE INVENTION

1. Field of the Invention

The present invention relates to a honeycomb structure.

2. Description of the Related Art

Conventionally, a honeycomb structure is used in an exhaust gas treatment apparatus used for treatment of NOx or the like contained in the exhaust gas of automobiles (for example, Patent Document 1).

The base frame part of the honeycomb structure, such as a cell wall, is formed of, for example, alumina. The cell wall supports a noble metal catalyst such as platinum and a NOx occluding catalyst formed of an alkali metal salt, an alkaline-earth metal salt, or the like. In general, when the exhaust gas has an oxidizing atmosphere (for example, at the time of a normal operation of a diesel engine), the noble metal catalyst serves to oxidize NOx such as NO and $NO_2$ in the exhaust gas caused to flow through the honeycomb structure into $NO_3$, and the NOx occluding catalyst serves to temporarily occlude $NO_3$ generated by this reaction. The $NO_3$ occluded in the NOx occluding catalyst is reduced into $N_2$ through the noble metal catalyst and discharged outside the system when the atmosphere of the exhaust gas becomes reducing (for example, at a rich spike time of a diesel engine).

Accordingly, it is possible to treat NOx contained in the exhaust gas of an automobile by causing the exhaust gas to flow through the honeycomb structure having such a configuration.

[Patent Document 1] Pamphlet of International Publication No. WO 2005/063653

In the conventional honeycomb structure, the noble metal catalyst that activates oxidation-reduction of NOx is supported substantially evenly from the surface of each cell wall along its depth direction.

However, all the noble metal catalyst supported on the honeycomb structure is not used equally for treatment reaction of NOx in exhaust gas. That is, actually, only the noble metal catalyst supported on the surface of the cell wall and in an extremely shallow region from the surface contributes to treatment reaction of NOx in exhaust gas, and it is often the case that the noble metal catalyst supported in other regions is hardly used.

This suggests the possibility that NOx may not be treated as sufficiently as expected from the amount of the noble metal catalyst supported on the honeycomb structure at the time of actual treatment of exhaust gas using the honeycomb structure. Actually, the efficiency of NOx treatment by the honeycomb structure supporting a noble metal catalyst is often found to be lower than expected. Accordingly, the honeycomb structure currently supports a large amount of a noble metal catalyst in order to ensure NOx treatment.

Further, usually, a valuable material such as platinum is used as a noble metal catalyst supported on the honeycomb structure. Therefore, such inefficient use of a noble metal catalyst poses a great problem in terms of cost.

SUMMARY OF THE INVENTION

The present invention is made in view of such a background, and has an object of providing a honeycomb structure with high NOx treatment performance compared with the conventional honeycomb structure when the comparison is made with the same amount of a noble metal catalyst supported. Further, the present invention has an object of providing a honeycomb structure capable of reducing the amount of a noble metal catalyst supported on the honeycomb structure compared with the conventional honeycomb structure when the comparison is made with the treatment performance being constant.

According to the present invention, a honeycomb structure is provided that includes one or more pillar honeycomb units each including inorganic particles and an inorganic binder and having multiple cells separated by cell walls, the cells extending from one end face to another end face of each of the honeycomb units along a longitudinal direction thereof, the honeycomb structure being **characterized in that** each of the cell walls supports a noble metal catalyst and a NOx occluding catalyst so that the amount of the noble metal catalyst is greater on the surface of the cell wall than in the center part of the thickness of the cell wall.

Here, in the honeycomb structure, the amount of the noble metal catalyst included in a region up to a depth of 30 $\mu$m of the thickness of the cell wall from the surface thereof be greater than the amount of the noble metal catalyst in the center part of the thickness of the cell wall.

In particular, the amount of the noble metal catalyst included in a region up to a depth of 10 $\mu$m of the thickness of the cell wall from the surface thereof may be greater than the amount of the noble metal catalyst in the center part of the thickness of the cell wall.

Here, in the honeycomb structure, the amount of the noble metal catalyst may be substantially constant in the depth direction of the cell wall in the region where the noble metal catalyst is supported.

Alternatively, the amount of the noble metal catalyst may gradually decrease in the depth direction of the cell wall in the region where the noble metal catalyst is supported.

Further, the noble metal catalyst may include at least one selected from the group consisting of platinum, palladium, and rhodium.

Further, the inorganic particles may include at least one selected from the group consisting of alumina, ceria, zirconia, titania, silica, zeolite, and mullite.

Further, the inorganic binder may include at least one selected from the group consisting of alumina sol, silica sol, titania sol, water glass, sepiolite, and attapulgite.

In addition, the honeycomb units may further include inorganic fibers.

Further, the inorganic fibers may include at least one selected from the group consisting of alumina, silica, silicon carbide, silica-alumina, glass, potassium titanate, and aluminum borate.

Further, the NOx occluding catalyst may include at least one of an alkali metal and an alkaline-earth metal.

Further, the NOx occluding catalyst may include at least one selected from the group consisting of potassium, sodium, barium, calcium, and magnesium.

The honeycomb structure may include plural honeycomb units and an adhesive layer joining the honeycomb units.

According to the present invention, it is possible to provide a honeycomb structure with high NOx treatment performance compared with the conventional honeycomb structure when the comparison is made with the same amount of a noble metal catalyst supported. Further, it is possible to reduce the amount of a noble metal catalyst supported on the honeycomb structure compared with the conventional honeycomb structure when the comparison is made with the treatment performance being constant.

BRIEF DESCRIPTION OF THE DRAWINGS

Other objects, features and advantages of the present invention will become more apparent from the following detailed description when read in conjunction with the accompanying drawings, in which:

FIG. 1 is a schematic perspective view of a honeycomb structure according to the present invention;
FIG. 2 is a schematic perspective view of a honeycomb unit constituting the honeycomb structure of FIG. 1;
FIG. 3 is a schematic diagram showing the relationship between the distance from the cell wall surface in the depth direction and the amount of a noble metal catalyst in a conventional honeycomb structure;
FIG. 4 is a schematic diagram showing a relationship between the distance from the cell wall surface in the depth direction and the amount of a noble metal catalyst in the honeycomb structure according to the present invention;
FIGS. 5A and 5B are schematic diagrams showing other relationships between the distance from the cell wall surface in the depth direction and the amount of a noble metal catalyst in the honeycomb structure according to the present invention; and
FIG. 6 is a schematic perspective view of another honeycomb structure according to the present invention.

DETAILED DESCRIPTION OF THE PREFERRED EMBODIMENTS

A description is given below, with reference to the accompanying drawings, of embodiments of the present invention.

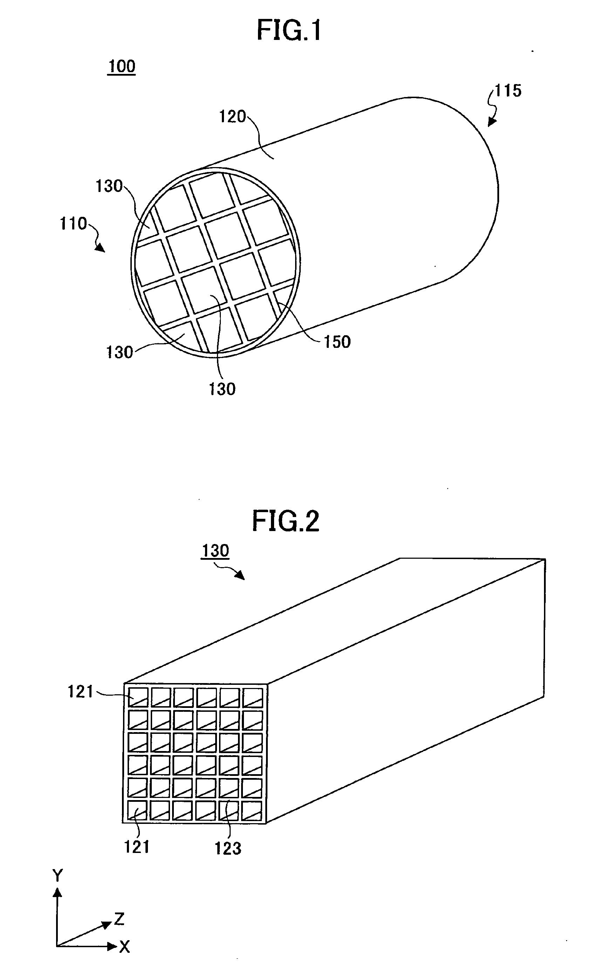

FIG. 1 is a schematic diagram showing a honeycomb structure according to the present invention. Further, FIG. 2 is a schematic diagram showing a honeycomb unit that is the basic unit of the honeycomb structure shown in FIG. 1.

As shown in FIG. 1, a honeycomb structure 100 according to the present invention has two open faces (end faces) 110 and 115, and a coat layer 120 is provided on the peripheral surface of the honeycomb structure 100 except its end faces 110 and 115.

The honeycomb structure 100 is formed by, for example, joining multiple pillar ceramic honeycomb units 130 shown in FIG. 2 (16 units in a four-by-four matrix in the case of FIG. 1) by interposing an adhesive layer 150 and thereafter cutting the exterior side into a predetermined shape (a cylindrical shape in the case of FIG. 1).

As shown in FIG. 2, the honeycomb unit 130 includes multiple cells (through holes) 121, extending from one end to the other end of the honeycomb unit 130 along its longitudinal directions and having two open end faces, and cell walls 123 separating the cells 121. Each cell wall 123 supports a noble metal catalyst such as platinum and a NOx occluding catalyst containing an alkali metal and/or an alkaline-earth metal (neither of which is graphically illustrated).

In the case of providing the honeycomb structure 100, formed by combining the honeycomb units 130 of such a configuration, in the middle of, for example, the exhaust gas line of a diesel engine and actually causing exhaust gas to flow through the honeycomb structure 100, the following phenomenon occurs.

First, in a lean operation mode (at the time of normal operation of the diesel engine), the exhaust gas that has flowed into each cell 121 of the honeycomb units 130 from one end face (for example, the end face 110) of the honeycomb structure 100 comes into contact with a noble metal catalyst supported on and in the cell wall 123 when passing through the cell 121. As a result, for example, NO gas contained in the exhaust gas is caused to react by the action of the noble metal catalyst as follows:

$$2NO + O_2 \rightarrow 2NO_2 \qquad (1)$$

$NO_2$ generated by this reaction is occluded in a NOx occluding catalyst near the noble metal catalyst by the following reactions:

$$2NO_2 + Ba + O_2 \rightarrow Ba\,(NO_3)_2, \text{ and} \qquad (2\text{-}1)$$

$$2NO_2 + 2K + O_2 \rightarrow 2KNO_3. \qquad (2\text{-}2)$$

Thereafter, the exhaust gas having NOx treated reaches the other end part of the cell 121 to be discharged from the other end face (for example, the end face 115) of the honeycomb structure 100.

On the other hand, when the operation of the engine switches to a rich spike mode, NOx occluded in the NOx occluding catalyst in the above-described lean mode is reduced by the following reaction:

$$4HC + 2CO + 6NO_2 \rightarrow 3N_2 + 6CO_2 + 2H_2O. \qquad (3)$$

$N_2$ resulting from the reduction is thereafter discharged from the other end face (for example, the end face 115) of the honeycomb structure 100.

Thus, in the honeycomb structure, it is possible to treat NOx contained in exhaust gas by the action of the noble metal catalyst and the NOx occluding catalyst supported on and in the cell walls of the honeycomb structure.

Here, according to the conventional honeycomb structure, the noble metal catalyst is supported substantially evenly in the thickness directions (X direction and Y direction of FIG. 2) of each cell wall and in the extending direction (Z direction of FIG. 2) of the cells.

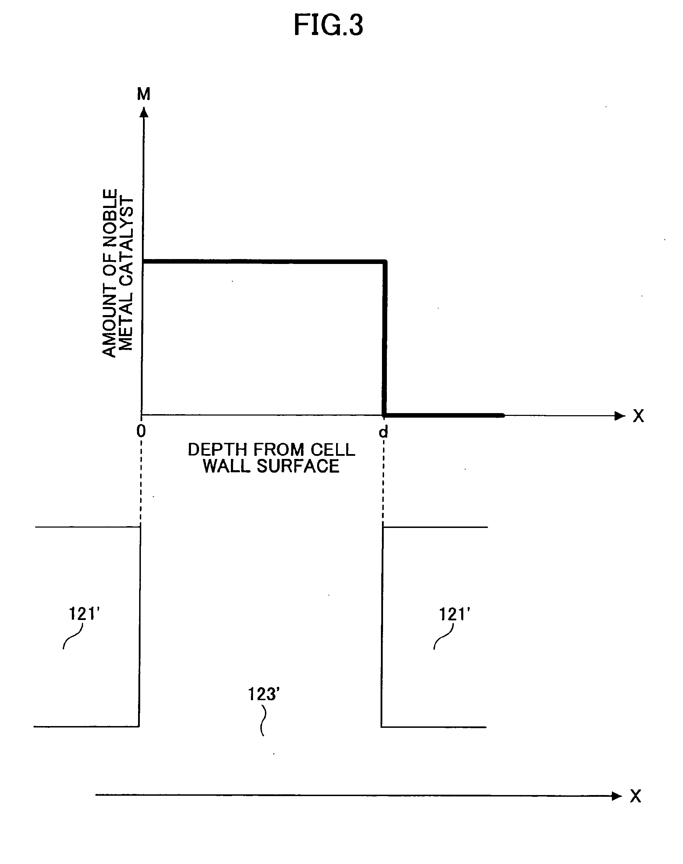

FIG. 3 is a schematic diagram showing the distribution of a noble metal catalyst in the conventional honeycomb structure. In the drawing, the horizontal axis X represents depth from the surface of a cell wall in any honeycomb unit, and the vertical axis M represents the amount of the noble metal catalyst supported on and in the cell wall. The thickness of the cell wall is indicated by "d." Thus, the region on the right side of "d" corresponds to a cell (through hole) 121'. It should be noted that "the surface of the cell wall" exists at two points: the position of X = 0 and the position of X = "d."

As illustrated in FIG. 3, the noble metal catalyst is supported evenly over the entire thickness "d" of the cell wall. Further, this tendency is substantially the same in any cross section perpendicular to the longitudinal directions of the honeycomb units.

However, such a supporting condition of the noble metal catalyst makes it difficult to utilize the noble metal catalyst supported in each region equally for the treating reaction of NOx. This is because the exhaust gas usually flows through the honeycomb structure along its longitudinal directions through each cell 121' so that the noble metal catalyst supported inside a cell wall 123' less often comes into contact with the exhaust gas.

This suggests the possibility that NOx may not be treated as sufficiently as expected from the amount of the noble metal catalyst supported on the honeycomb structure in actual treatment of the exhaust gas using the honeycomb structure. Further, actually, the efficiency of NOx treatment by the honeycomb structure is often lower than expected. Accordingly, it follows that the honeycomb structure should support a larger amount of the noble metal catalyst than is supposed to be necessary in order to ensure preventing NOx from being discharged untreated.

Further, a valuable material such as platinum is usually used for the noble metal catalyst supported on the honeycomb structure. Therefore, inefficient use of such a noble metal catalyst poses a great problem in terms of cost.

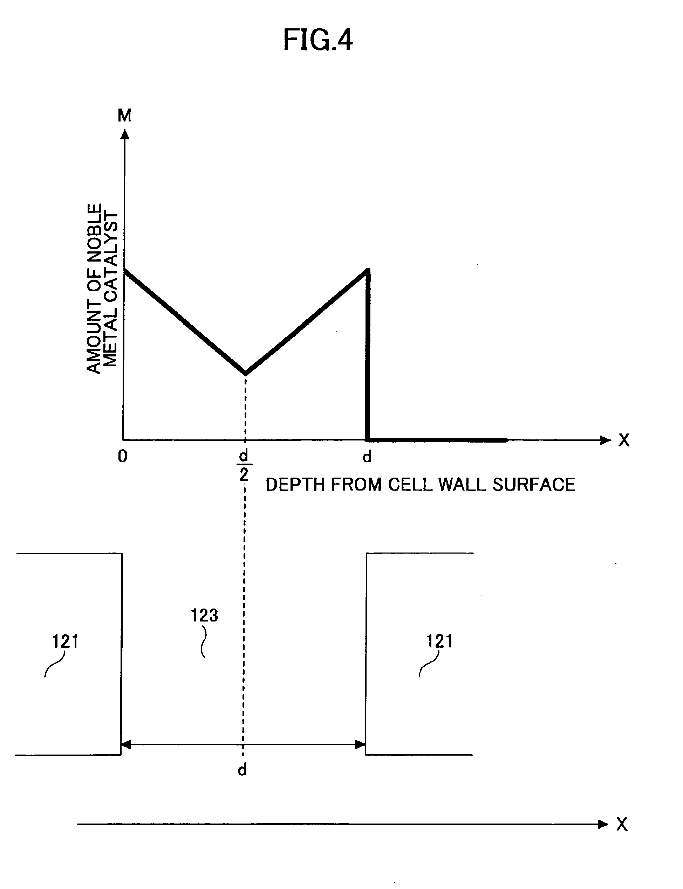

On the other hand, in the honeycomb structure 100 according to the present invention, the amount of the noble metal catalyst supported on and in the cell wall 123 changes with the depth from the cell wall surface in the range between 0 (zero) and "d" as shown schematically in a distribution of the noble metal catalyst of the honeycomb structure 100 of the present invention of FIG. 4. That is, the amount of the noble metal catalyst is greater on the surface side of the cell wall 123 than on the center (where the X coordinate is "d"/2) side of the cell wall 123.

Such a change in the amount of the noble metal catalyst supported with respect to the depth (thickness) direction of the cell wall allows the honeycomb structure 100 according to the present invention to utilize the noble metal catalyst more effectively in NOx treatment than does the conventional honeycomb structure. This is because the amount of the noble metal catalyst supported is smaller on the center side so that almost all the noble metal catalyst is effectively utilized.

Therefore, according to the present invention, assuming that the amount of the noble metal catalyst is the same as that in the conventional honeycomb structure, it is possible to increase the efficiency of NOx treatment. Further, assuming that the efficiency of treatment is the same, it is possible to significantly reduce the amount of the noble metal catalyst supported compared with the conventional honeycomb structure.

In the above-described case (FIG. 4), the relationship between the depth X from the surface of the cell wall 123 and the amount M of the noble metal catalyst supported changes in a "V-letter shape." However, the embodiment of the present invention is not limited to this.

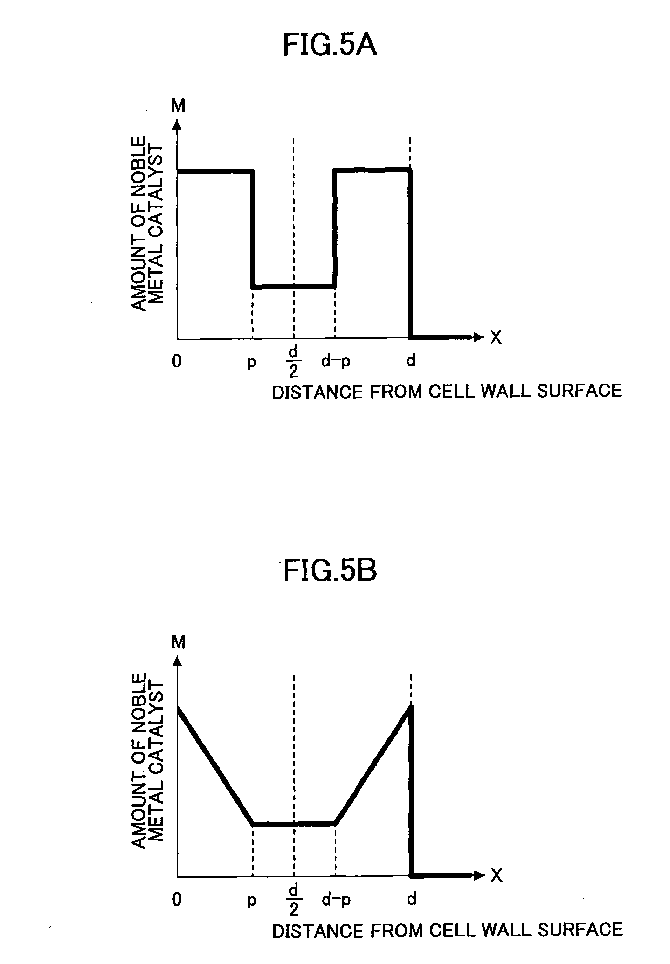

FIGS. 5A and 5B are diagrams schematically showing other distributions of the noble metal catalyst of the honeycomb structure of the present invention. These drawings show other relationships between the depth X from the surface of the cell wall 123 and the amount M of the noble metal catalyst supported which relationships are applicable to the honeycomb structure 100 of the present invention. The same as in the case of FIG. 4, "d" indicates the thickness of the cell wall 123 in FIGS. 5A and 5B. Accordingly, the region on the right side of "d" corresponds to the cell 121 (through hole). Further, "the surface of the cell wall" exists at two points: the position of X = 0 and the position of X = "d."

According to the change behavior of FIG. 5A, the amount of the noble metal catalyst is greater in the region of $0 \leq X \leq$ "p" and the region of "d"-"p" $\leq X \leq$ "p," where X is the depth from the cell wall surface, than in other regions. Here, p may be in the range of 0 < "p" < "d"/2. For example, the experiments (Examples) of the present invention show that NOx can be treated with significantly high efficiency even with the same amount of the noble metal catalyst in the case where "p" = "d"/20 to 3"d"/20.

According to the change behavior of FIG. 5B, the amount of the noble metal catalyst decreases with an increase in the depth of the cell wall in the region where the depth from the cell wall surface is $0 \leq X \leq$ "p." The same applies to the change behavior of the amount of the noble metal catalyst in the region of "d"-"p" $\leq X \leq$ "p." In the region where the depth from the cell wall surface is "p" < X < "d"-"p," the amount of the noble metal catalyst is constant.

It may be clear that such a case, although not graphically illustrated, may also be included as an embodiment of the present invention, where there is no mirror symmetry in the change behavior of the amount of the noble metal catalyst between the region where the distance X from the cell wall surface is 0 to "d"/2 and the region where the distance X from the cell wall surface is "d"/2 to "d." For example, the amount M of the noble metal catalyst may differ between the region of $0 \leq X \leq$ "p" and the region of "d"-"p" $\leq X \leq$ "p" in the change in FIG. 5A. Likewise, in the change in FIG. 5B, the absolute value of the gradient of the amount M of the noble metal catalyst and the amount M of the noble metal catalyst at the cell wall surface (X = 0, "d") may differ between the region of $0 \leq X \leq$ "p" and the region of "d"-"p" $\leq X \leq$ "p."

That is, what is important in the present invention is that the noble metal catalyst is supported on and in the cell wall 123 so that the amount of the noble metal catalyst is greater on the surface side of the cell wall 123 than on the center side of the cell wall 123. As long as this is satisfied, the amount of the noble metal catalyst in the depth direction of the cell wall 123 may have any tendency to change.

The honeycomb structure 100 of the present invention includes the pillar honeycomb units 130 each including inorganic particles and an inorganic binder and having the cells 121 separated by the cell walls 123, the cells 121 extending from one end face to another end face of the honeycomb unit 130 along its longitudinal directions, wherein each cell wall 123 supports a noble metal catalyst and a NOx occluding catalyst, and the amount of the noble metal catalyst supported is greater on the surface of the cell wall 123 than in the center part of the thickness of the cell wall 123.

It is desirable that the amount of the noble metal catalyst contained in a region up to a depth of 30 $\mu$m of the thickness of the cell wall 123 from the surface thereof be greater than in the center part of the thickness of the cell wall 123. Further, it is more preferable that the amount of the noble metal catalyst contained in a region up to a depth of 10 $\mu$m of the thickness of the cell wall 123 from the surface thereof be greater than in the center part of the thickness of the cell wall 123.

It is preferable that the thickness of the cell wall 123 of the honeycomb structure 100 (honeycomb unit 130) of the present invention be 0.1 to 0.4 mm. It may be considered that the region up to the depth of 30 $\mu$m of the thickness of the cell wall 123 is a region of 3/40 to 3/10 of the desirable thickness of the cell wall 123 and that the region up to the depth of 10 $\mu$m of the thickness of the cell wall 123 is a region of 1/40 to 1/10 of the desirable thickness of the cell wall 123, so that it is desirable that the amount of the noble metal catalyst be greater in the above-described regions than in the center part of the thickness of the cell wall 123.

Letting the thickness of the cell wall 123 of the honeycomb structure 100 (honeycomb unit 130) be 0.2 mm, the region up to 30 $\mu$m of the thickness of the cell wall 123 is a region of 3/20 of the thickness of the cell wall 123, and the region up to 10 $\mu$m of the thickness of the cell wall 123 is a region of 1/20 of the thickness of the cell wall 123.

Further, according to the honeycomb structure 100 (honeycomb unit 130) of the present invention, the amount of the noble metal catalyst may be substantially constant in the direction of the depth of the cell wall 123 where the noble metal catalyst is supported in the region up to the depth of 30 $\mu$m of the thickness of the cell wall 123, or the amount of the noble metal catalyst may gradually decrease in the direction of the depth of the cell wall 123 where the noble metal catalyst is supported in the region up to the depth of 30 $\mu$m of the thickness of the cell wall 123.

Further, according to the honeycomb structure 100 (honeycomb unit 130) of the present invention, the amount of the noble metal catalyst may be substantially constant in the direction of the depth of the cell wall 123 where the noble metal catalyst is supported in the region up to the depth of 10 $\mu$m in the thickness of the cell wall 123, or the amount of the noble metal catalyst may gradually decrease in the direction of the depth of the cell wall 123 where the noble metal catalyst is supported in the region up to the depth of 10 $\mu$m in the thickness of the cell wall 123.

The above-described structure makes it possible for the honeycomb structure 100 of the present invention to support a reduced amount of a noble metal catalyst compared with the conventional honeycomb structure.

Here, the honeycomb unit 130, which includes inorganic particles and an inorganic binder, may further include inorganic fibers.

The inorganic particles are desirably particles of alumina, silica, zirconia, titania, ceria, zeolite, mullite, or the like. These particles may be used alone or in combination. Of these, alumina and ceria are particularly desirable.

The inorganic binder may employ inorganic sol, a clay-based binder, etc. Examples of the inorganic sol include alumina sol, silica sol, titania sol, and water glass. Examples of the clay-based binder include clay, kaolin, montmonrillonite, and clays of a double-chain structure type, such as sepiolite and attapulgite. These may be used alone or in combination.

Of these, at least one selected from the group consisting of alumina sol, silica sol, titania sol, water glass, sepiolite, and attapulgite is desirable.

Further, in the case of adding inorganic fibers to the honeycomb unit 130, alumina, silica, silicon carbide, silica-alumina, glass, potassium titanate, aluminum borate or the like is desirable as the material of the inorganic fibers. These may be used alone or in combination. Of the above-described materials, alumina is desirable.

With respect to the amount of the inorganic particles included in the honeycomb unit 130, a desirable lower limit is 30 wt%, a more desirable lower limit is 40 wt%, and a further desirable lower limit is 50 wt%, while a desirable upper limit is 90 wt%, a more desirable upper limit is 80 wt%, and a further desirable upper limit is 75 wt%. If the inorganic particles content is less than 30 wt%, the inorganic particles contributing to conversion are relatively reduced in amount. On the other hand, if the inorganic particles content exceeds 90 wt%, the strength of the honeycomb unit may be reduced.

The inorganic binder included is preferably more than or equal to 5 wt%, more preferably more than or equal to 10 wt%, and further preferably more than or equal to 15 wt% as solids content. On the other hand, the inorganic binder content is preferably less than or equal to 50 wt%, more preferably less than or equal to 40 wt%, and further preferably less than or equal to 35 wt% as solids content. If the amount of the inorganic binder is less than 5 wt% as solids content, the manufactured honeycomb unit may be reduced in strength. On the other hand, if the amount of the inorganic binder exceeds 50 wt% as solids content, the moldability of the material composition may be degraded.

In the case of the honeycomb unit 130 including inorganic fibers, the total amount of the inorganic fibers has a lower limit of desirably 3 wt%, more desirably 5 wt%, and further desirably 8 wt%, and has an upper limit of desirably 50 wt%, more desirably 40 wt%, and further desirably 30 wt%. If the inorganic fibers content is less than 3 wt%, the contribution of the inorganic fibers to an increase in the honeycomb unit strength is reduced. If the inorganic fibers content exceeds 50 wt%, the inorganic particles contributing to NOx conversion are relatively reduced in amount.

The shape of a cross section of the honeycomb unit 130 perpendicular to its longitudinal directions is not limited in particular, and may be any shape as long as the honeycomb units 130 are joinable by interposing the adhesive layer 150. The shape of the honeycomb unit 130 may also be square, rectangular, hexagonal, sectorial, etc.

Further, the shape of a cross section of each cell 121 of the honeycomb unit 130 perpendicular to its longitudinal directions is not limited in particular, and may also be a triangular or polygonal shape other than a square shape.

The cell density of the honeycomb unit 130 is preferably in the range of 15.5-186 cells/cm$^2$ (100-1200 cpsi), more preferably in the range of 46.5-170 cells/cm$^2$ (300-1100 cpsi), and further preferably in the range of 62.0-155 cells/cm$^2$ (400-1000 cpsi).

The thickness of the cell wall 123 of the honeycomb unit 130 (before disposition of a noble metal catalyst) is not limited in particular, but has a desirable lower limit of 0.1 mm in terms of strength and has a desirable upper limit of 0.4 mm.

As described above, the cell wall 123 of the honeycomb unit 130 supports a noble metal catalyst and a NOx occluding catalyst. The noble metal catalyst is not limited in particular, and may employ a noble metal such as platinum, palladium, or rhodium. Further, the NOx occluding catalyst includes an alkali metal such as potassium or sodium and/or an alkaline-earth metal such as barium, calcium, or magnesium (for example, a carbonate, etc.).

The honeycomb structure 100 of the present invention may have any shape. For example, in addition to a cylindrical shape shown in FIG. 1, the honeycomb structure 100 may also have a shape such as a cylindroid, square pillar, or polygonal pillar.

The paste forming the coat layer 120 and the adhesive layer 150 of the honeycomb structure 100 (adhesive layer paste and coat layer paste), which is formed of, for example, inorganic particles and an inorganic binder, may further include inorganic fibers.

The coat layer 120 is usually formed using paste including an organic binder in addition to an inorganic binder and inorganic particles as a raw material. The organic binder may employ, for example, polyvinyl alcohol, methylcellulose, ethylcellulose, carboxymethylcellulose and the like. These may be used alone or in combination. Of organic binders, carboxymethylcellulose is desirable.

Thereafter, the coat layer paste is applied on the peripheral surface of the honeycomb structure 100, and then is dried and solidified, so that the coat layer 120 is formed. A pore-forming agent such as balloons, which are minute hollow balls whose component is oxide-based ceramic, spherical acryl particles, or graphite may be added to the paste serving as material paste as required. The coat layer 120 is preferably 0.1 mm to 2.0 mm in thickness.

Further, according to the honeycomb structure 100 of the present invention, the same material is used for the adhesive layer 150 and the coat layer 120. The adhesive layer 150, however, may be different in material from the coat layer 120.

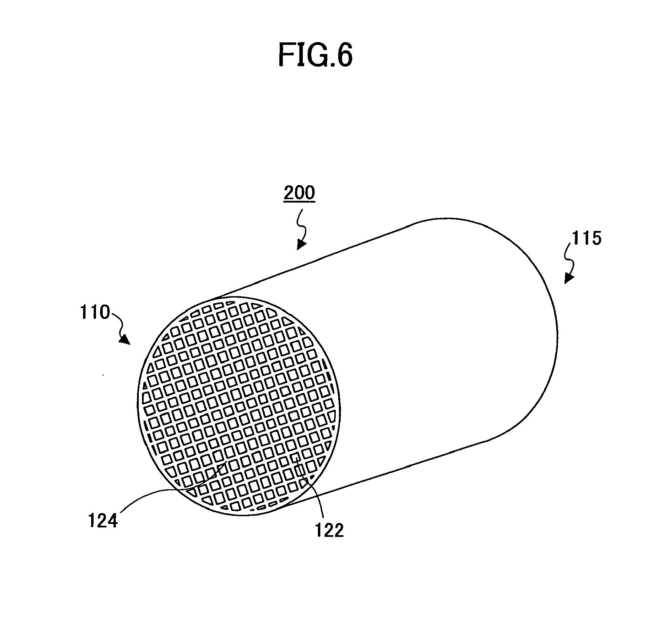

The above description is given, taking the honeycomb structure 100 formed by joining the multiple honeycomb units 130 by interposing the adhesive layer 150 as an example. FIG. 6 shows another example of the honeycomb structure of the present invention. A honeycomb structure 200 is the same as the honeycomb structure 100 except that the honeycomb structure 200 is formed of a single honeycomb unit having multiple cells 122 provided in parallel lengthwise, being separated by cell walls 124. The honeycomb structure 200 may have or may not have a coat layer formed on its peripheral surface.

These honeycomb structures 100 and 200 may be applied to, for example, an apparatus for treating exhaust gas discharged from a diesel engine or the like.

It may be obvious to those skilled in the art that the honeycomb structure 200 having such a configuration also produces the effects as described above when the honeycomb structure 200 is caused to support a noble metal catalyst so that the amount of the noble metal catalyst is greater on the surface side of each cell wall 124 than on the center side of the cell wall 124.

(Method of Manufacturing Honeycomb Structure)

Next, a description is given of a method of manufacturing a honeycomb structure according to the present invention. Here, a description is given, taking a method of manufacturing the honeycomb structure 100 as an example.

First, a honeycomb unit molded body is made by extrusion molding using raw material paste including inorganic particles and an inorganic binder as principal components and further having inorganic fibers added as required.

In addition to these, an organic binder, a dispersion medium, and a molding aid may be suitably added to the raw material paste in accordance with moldability. The organic binder is not limited in particular. The organic binder includes one or more organic binders selected from, for example, methylcellulose, carboxymethylcellulose, hydroxyethylcellulose, polyethylene glycol, phenolic resin, epoxy resin and the like. The blending amount of the organic binder is preferably 1-10 parts by weight to the total of 100 parts by weight of the inorganic particles, the inorganic binder, and the inorganic fibers.

The dispersion medium is not limited in particular, and may be, for example, water, an organic solvent (such as benzene), alcohol (such as methanol), etc. The molding aid is not limited in particular, and may be, for example, ethylene glycol, dextrin, a fatty acid, fatty acid soap, polyalcohol and the like.

The raw material paste is not limited in particular, and is preferably subjected to mixing and kneading. For example, the raw material paste may be mixed using a mixer, attritor, or the like, and may be well kneaded with a kneader or the like. The method of molding the raw material paste is not limited in particular. It is preferable, for example, to form the raw material paste into a shape having cells by extrusion molding or the like.

Next, it is preferable to dry the obtained molded body. The drying apparatus used for drying is not limited in particular, and may be a microwave drying apparatus, hot air drying apparatus, dielectric drying apparatus, reduced-pressure drying apparatus, vacuum drying apparatus, freeze drying apparatus, or the like. Further, it is preferable to degrease the obtained molded bodies. The conditions for degreasing, which are not limited in particular and are suitably selected in accordance with the kind and amount of the organic matter included in the molded body, are preferably approximately 400 °C and 2 hours. Further, it is preferable to subject the obtained molded bodies to firing. The condition for firing is not limited in particular, and is preferably 600-1200 °C, and more preferably 600-1000 °C. This is because sintering does not progress at firing temperatures less than 600 °C, thus resulting in reduced strength as a honeycomb unit, and because sintering progresses excessively at firing temperatures more than 1200 °C, thus reducing the specific surface area per unit volume of the honeycomb unit.

Next, the cell wall of the obtained honeycomb unit is caused to support a noble metal catalyst. It is preferable to cause the noble metal catalyst to be supported on and in the cell wall by impregnating the honeycomb unit with a solution including platinum, or so-called "impregnation." According to the present invention, it is necessary to cause the noble metal catalyst to be supported on and in the cell wall so that the amount of the noble metal catalyst is greater on the surface side of the cell wall than on the center side of the cell wall as described above. According to "impregnation," it is relatively easy to provide the cell wall with the noble metal catalyst in such a condition for the following reason.

Normally, the surface of a substance has functional groups of $OHH^+$, OH, and $O^-$ adhering thereto. For example, a honeycomb unit using alumina for inorganic particles has an acid surface, on which more $OHH^+$ groups exist than $O^-$ groups. The amount of these functional groups per unit volume depends of the specific surface area of the honeycomb unit. As the specific surface area increases, the amount of the functional groups per unit volume also increases. Further, when the honeycomb unit having a surface in such a condition is impregnated with an impregnating solution including negatively charged platinum ions, platinum adheres to the surface of the cell wall since the platinum ions tend to bond to the $OHH^+$ groups on the surface of the cell wall. Further, the amount of the $OHH^+$ groups per unit volume also increases in response to an increase in the specific surface area of the honeycomb unit. Therefore, in this case, the adhesion of platinum shifts more toward the surface side of the cell wall. Accordingly, by changing the specific surface area of the honeycomb unit, it is possible to control the amount of the $OHH^+$ groups per unit volume, thereby controlling the depth of penetration of the noble metal catalyst into the cell wall.

According to the present invention, the specific surface area of the inorganic particles forming the honeycomb unit is preferably in the range of 50 $m^2$/g to 300 $m^2$/g. Further, for example, a nitric acid solution such as a dinitrodiammine platinum nitric acid solution is used for the impregnating solution.

The noble metal catalyst may be supported not at this stage but after making a honeycomb structure by combining honeycomb units.

Next, the cell wall of the honeycomb unit is caused to support a NOx occluding catalyst. It is possible to have the NOx occluding catalyst supported on and in the cell walls by impregnating the honeycomb unit with, for example, an acetic acid aqueous solution of barium carbonate.

Next, other honeycomb units are stacked one after another on the side surfaces of the honeycomb unit obtained by the above-described processes after applying thereon, with uniform thickness, adhesive layer paste to later serve as an adhesive layer. By repeating this process, a honeycomb structure of a desired size (for example, of honeycomb units arranged in a four-by-four matrix) is made. The above-described raw material paste may be used for the adhesive layer paste.

The adhesive layer paste is not limited in particular, and for example, a mixture of an inorganic binder and inorganic particles, a mixture of an inorganic binder and inorganic fibers, a mixture of an inorganic binder, inorganic particles, and inorganic fibers, or the like may be employed. Further, an organic binder may be added thereto. The organic binder is not limited in particular, and may be one ore more selected from, for example, polyvinyl alcohol, methylcellulose, ethylcellulose, carboxymethylcellulose, etc.

It is preferable that the adhesive layer that joins honeycomb units be 0.3 to 2 mm in thickness. This is because if the thickness of the adhesive layer is less than 0.3 mm, sufficient bonding strength may not be obtained. Further, if the thickness of the adhesive layer exceeds 2 mm, pressure loss may be increased. The number of honeycomb units to be joined is suitably determined in accordance with the size of the honeycomb structure.

Next, the honeycomb structure is heated to dry and solidify the adhesive layer paste so as to form the adhesive layer and adhere and fix the honeycomb units to each other.

Next, the honeycomb structure is cut into, for example, a cylindrical shape using a diamond cutter or the like, thereby making a honeycomb structure with a necessary exterior shape.

Next, after applying coat layer paste on the peripheral surface (side surface) of the honeycomb structure, the coat layer paste is dried and solidified to form a coat layer. The coat layer paste is not limited in particular, and may be either the same as or different from the adhesive layer paste. The blending ratio of the coat layer paste may be either the same as or different from the blending ratio of the adhesive layer paste. The thickness of the coat layer is not limited in particular.

It is preferable to subject this honeycomb structure to heat treatment after joining multiple honeycomb units by interposing the adhesive layer (or after forming the coat layer in the case of providing the coat layer). As a result of this treatment, if an organic binder is included in the adhesive layer paste or the coat layer paste, this organic binder can be removed by degreasing. The conditions for degreasing, which are suitably determined in accordance with the kind and amount of the included organic material, are usually approximately 700 °C and 2 hours.

By the above-described processes, a joining-type honeycomb structure of the shape shown in FIG. 1 can be manufactured.

[Examples]

Next, a description is given of examples according to the present invention.

[Example 1]

First, 2250 parts by weight of $\gamma$-alumina particles (2 $\mu$m in average particle size), 680 parts by weight of alumina fibers (6 $\mu$m in average fiber diameter and 100 $\mu$m in average fiber length), and 2600 parts by weight of alumina sol (30 wt% as solids content) were mixed. To the obtained mixture, 320 parts by weight of methylcellulose as an organic binder and small amounts of a plasticizer, surfactant, and lubricant were added. The mixture was further mixed and kneaded, so that a mixture composition was obtained. Next, this mixture composition was subjected to extrusion molding with an extruder, so that a raw molded body was obtained.

The raw molded body was sufficiently dried using a microwave drying apparatus and a hot air drying apparatus, and was degreased, being retained at 400 °C for 2 hours. Thereafter, the molded body was subjected to firing, being retained at 700 °C for 2 hours, so that a porous honeycomb unit having a square pillar shape (dimensions: vertically 35 mm, horizontally 35 mm, and 50.0 mm in length) was obtained. This porous honeycomb unit had a cell density of 93 cells/cm$^2$ and a cell wall thickness of 0.2 mm. Further, the $\gamma$-alumina particles had a specific surface area of 200 m$^2$/g.

Next, the porous honeycomb unit of a square pillar shape was cut along its axial directions using a diamond cutter, so that a cylindrical honeycomb unit of sample for evaluation (dimensions: 30 mm in diameter and 50 mm in length) was obtained.

Next, the cell wall of the obtained cylindrical honeycomb unit (sample for evaluation) was caused to support platinum. A dinitrodiammine platinum nitric acid solution was used as an impregnating solution. The amount of platinum supported per unit volume of the cylindrical honeycomb unit (sample for evaluation) was 3 g/L.

Next, the obtained cylindrical honeycomb unit (sample for evaluation) was impregnated with an acetic acid aqueous solution of barium carbonate and potassium carbonate, and thereafter, this honeycomb unit was retained at 600 °C for 1 hour. By this processing, each cell wall was caused to support a NOx occluding catalyst formed of a mixture of barium carbonate and potassium carbonate (equimolar ratio). The weight of the NOx occluding catalyst supported per unit volume of the cylindrical honeycomb unit (sample for evaluation) was 0.2 mol/L.

The supporting condition of platinum was evaluated using the honeycomb unit (sample for evaluation) according to Example 1 made as described above. The supporting condition of platinum was evaluated using an electron probe microanalyzer (JXA-8500F, manufactured by JEOL Ltd.). According to the results of the evaluation and observation, the supporting region of platinum was substantially up to 10 $\mu$m from the cell wall surface. In the case of the honeycomb unit (sample for evaluation) according to Example 1, the amount of platinum supported changed in the depth direction of the cell wall substantially in the manner shown in FIG. 5A ("p" = 10 $\mu$m).

[Example 2]

Next, a honeycomb unit (sample for evaluation) according to Example 2 was manufactured in the same manner as in Example 1. In Example 2, the specific surface area of $\gamma$-alumina was 180 m$^2$/g. The change of the amount of platinum supported in the depth direction of the cell wall was evaluated in the same manner as in Example 1. According to the results of the evaluation and observation, the supporting region of platinum was substantially up to 20 $\mu$m from the cell wall surface. In the case of the honeycomb unit (sample for evaluation) according to Example 2, the amount of platinum supported changed in the depth direction of the cell wall substantially in the manner shown in FIG. 5A ("p" = 20 $\mu$m). The other conditions are the same as in the case of Example 1.

[Example 3]

Next, a honeycomb unit (sample for evaluation) according to Example 3 was manufactured in the same manner as in Example 1. In Example 3, the specific surface area of $\gamma$-alumina was 170 m$^2$/g. The change of the amount of platinum supported in the depth direction of the cell wall was evaluated in the same manner as in Example 1. According to the results of the evaluation and observation, the supporting region of platinum was substantially up to 30 $\mu$m from the cell wall surface. In the case of the honeycomb unit (sample for evaluation) according to Example 3, the amount of platinum supported changed in the depth direction of the cell wall substantially in the manner shown in FIG. 5A ("p" = 30 $\mu$m). The other conditions are the same as in the case of Example 1.

[Example 4]

Next, a honeycomb unit (sample for evaluation) according to Example 4 was manufactured in the same manner as in Example 1. In Example 4, the weight of platinum per unit volume of the cylindrical honeycomb unit (sample for evaluation) was 2 g/L. The other conditions are the same as in the case of Example 1.

[Example 5]

Next, a honeycomb unit (sample for evaluation) according to Example 5 was manufactured in the same manner as in Example 2. In Example 5, the weight of platinum per unit volume of the cylindrical honeycomb unit (sample for evaluation) was 2 g/L. The other conditions are the same as in the case of Example 2.

[Example 6]

Next, a honeycomb unit (sample for evaluation) according to Example 6 was manufactured in the same manner as in Example 3. In Example 6, the weight of platinum per unit volume of the cylindrical honeycomb unit (sample for evaluation) was 2 g/L. The other conditions are the same as in the case of Example 3.

[Comparative Example 1]

Next, a honeycomb unit (sample for evaluation) according to Comparative Example 1 was manufactured in the same manner as in Example 1. In Comparative Example 1, however, a tetraamine platinum nitric acid solution was used as an impregnating solution. Further, in Comparative Example 1, the specific surface area of $\gamma$-alumina was 170 m$^2$/g. The amount of platinum supported per unit volume of the cylindrical honeycomb unit (sample for evaluation) was 3 g/L. The change of the amount of platinum supported in the depth direction of the cell wall was evaluated in the same manner as in Example 1. As a result of the evaluation and observation, it was found that platinum was supported substantially evenly through to the inside of the cell wall.

TABLE 1 collectively shows the amount of platinum supported (g/L), the specific surface area of alumina (m$^2$/g), the depth of a platinum supporting region from the surface of the cell wall, the ratio of the platinum supporting region to the thickness of the cell wall (200 $\mu$m), etc. in each of Examples and Comparative Example. In the table, "the ratio of the platinum supporting region to the thickness of the cell wall" is a value focused only on the platinum supporting region on one surface side of the cell wall. That is, in the case of a platinum supporting amount distribution as FIG. 5A, for example, this ratio includes only the $0 \leq X \leq$ "p" region and does not include the "d"-"p" $\leq X \leq$ "d" region.

TABLE 1

| | AMOUNT M OF PLATINUM SUPPORTED (g/L) | SPECIFIC SURFACE AREA OF ALUMINA (m$^2$/g) | Pt SUPPORTING REGION | | |
| --- | --- | --- | --- | --- | --- |
| | | | DEPTH "p" FROM CELL WALL SURFACE ($\mu$m) | | |
| EXAMPLE 1 | 3 | 200 | 0~10 | | |
| EXAMPLE 2 | 3 | 180 | 0~20 | | |
| EXAMPLE 3 | 3 | 170 | 0~30 | | |
| EXAMPLE 4 | 2 | 200 | 0~10 | | |
| EXAMPLE 5 | 2 | 180 | 0~20 | | |
| EXAMPLE 6 | 2 | 170 | 0~30 | | |
| COMPARATIVE EXAMPLE 1 | 3 | 170 | 0~200 | | |
| | RATIO OF Pt SUPPORTING REGION TO CELL WALL THICKNESS ("d"= 200 $\mu$m) (ONLY REGION ON ONE SIDE) | NOx CONVERSION RATE (%) | | | |
| | | 200°C | 300°C | 400°C |
| EXAMPLE 1 | 1/20 | 86 | 97 | 90 |
| EXAMPLE 2 | 1/10 | 86 | 95 | 90 |
| EXAMPLE 3 | 3/20 | 84 | 95 | 88 |
| EXAMPLE 4 | 1/20 | 80 | 92 | 88 |
| EXAMPLE 5 | 1/10 | 80 | 91 | 87 |
| EXAMPLE 6 | 3/20 | 78 | 90 | 85 |
| COMPARATIVE EXAMPLE 1 | 1/1 | 68 | 84 | 75 |

[Evaluation of NOx Treatment Performance]

The NOx treatment performance was evaluated using the honeycomb units (samples for evaluation) according to Examples 1 through 6 and Comparative Example 1 manufactured by the above-described methods. The NOx treatment performance was evaluated by causing a gas mixture simulating each of the operating conditions of lean and rich spike of a vehicular diesel engine to flow through the honeycomb units (samples for evaluation) so as to have NOx treated and measuring the amount of NO (nitrogen monoxide) included in the gas discharged from the honeycomb units (samples for evaluation).

TABLE 2 shows the composition of each of the gas at a lean operation time and the gas at a rich spike time. At the time of testing, the cycle of first introducing a lean gas for 110 seconds and then introducing a rich gas for 10 seconds into the honeycomb unit (sample for evaluation) was repeated until there was hardly any change in the concentration of NO contained in the discharged gas. The SV value was 50,000/hr.

TABLE 2

| GAS COMPONENT | GAS CONCENTRATION | |
|---|---|---|
| | LEAN OPERATION TIME | RICH SPIKE TIME |
| $CO_2$ | 10vol% | 10vol% |
| $O_2$ | 10vol% | - |
| NO | 150ppm | 150ppm |
| CO | 150ppm | 1500ppm |
| THC (HYDROCARBON) | 200ppm* | 2000ppm* |
| $H_2O$ | 5vol% | 5vol% |
| $N_2$ | Balance | Balance |
| * CARBON CONTENT BASIS | | |

The NO concentration was measured using an apparatus manufactured by HORIBA (MEXA-7100D). The NO detection limit of this apparatus is 0.1 ppm.

The test temperature (temperature of the honeycomb unit [sample for evaluation] and simulation gas) was one of 200 °C, 300 °C, and 400 °C, and was held constant during the test.

The NOx treatment performance was evaluated using NOx conversion rate N, where NOx conversion rate N was calculated by:

$$N (\%) = \{(\text{NO concentration in the gas mixture before its introduction into the honeycomb unit} - \text{NO concentration in the gas discharged from the honeycomb unit})\}/(\text{NO concentration in the gas mixture before its introduction into the honeycomb unit}) \times 100. \cdots (4)$$

The results are shown in the rightmost column of TABLE 1 described above. These results have clarified that the honeycomb structures according to the present invention (honeycomb units of Examples 1 through 6) show a higher NOx conversion rate than the conventional honeycomb structure (honeycomb unit of Comparative Example 1) at any of the temperatures.

**Claims**

1. A honeycomb structure including one or more pillar honeycomb units each including inorganic particles and an inorganic binder and having multiple cells separated by cell walls, the cells extending from one end face to another end face of each of the honeycomb units along a longitudinal direction thereof, **characterized in that:**

each of the cell walls supports a noble metal catalyst and a NOx occluding catalyst so that an amount of the noble metal catalyst is greater on a surface of the cell wall than in a center part of a thickness of the cell wall.

2.  The honeycomb structure as claimed in claim 1, **characterized in that** the amount of the noble metal catalyst included in a region up to a depth of 30 μm of the thickness of the cell wall from the surface thereof is greater than the amount of the noble metal catalyst in the center part of the thickness of the cell wall.

3.  The honeycomb structure as claimed in claim 2, **characterized in that** the amount of the noble metal catalyst included in a region up to a depth of 10 μm of the thickness of the cell wall from the surface thereof is greater than the amount of the noble metal catalyst in the center part of the thickness of the cell wall.

4.  The honeycomb structure as claimed in claim 2 or 3, **characterized in that** the amount of the noble metal catalyst is substantially constant in a depth direction of the cell wall in the region where the noble metal catalyst is supported.

5.  The honeycomb structure as claimed in claim 2 or 3, **characterized in that** the amount of the noble metal catalyst gradually decreases in a depth direction of the cell wall in the region where the noble metal catalyst is supported.

6.  The honeycomb structure as claimed in any of claims 1 to 5, **characterized in that** the noble metal catalyst includes at least one selected from the group consisting of platinum, palladium, and rhodium.

7.  The honeycomb structure as claimed in any of claims 1 to 6, **characterized in that** the inorganic particles include at least one selected from the group consisting of alumina, ceria, zirconia, titania, silica, zeolite, and mullite.

8.  The honeycomb structure as claimed in any of claims 1 to 7, **characterized in that** the inorganic binder includes at least one selected from the group consisting of alumina sol, silica sol, titania sol, water glass, sepiolite, and attapulgite.

9.  The honeycomb structure as claimed in any of claims 1 to 8, **characterized in that** the honeycomb units further include inorganic fibers.

10. The honeycomb structure as claimed in claim 9, **characterized in that** the inorganic fibers include at least one selected from the group consisting of alumina, silica, silicon carbide, silica-alumina, glass, potassium titanate, and aluminum borate.

11. The honeycomb structure as claimed in any of claims 1 to 10, **characterized in that** the NOx occluding catalyst includes at least one of an alkali metal and an alkaline-earth metal.

12. The honeycomb structure as claimed in claim 11, **characterized in that** the NOx occluding catalyst includes at least one selected from the group consisting of potassium, sodium, barium, calcium, and magnesium.

13. The honeycomb structure as claimed in any of claims 1 to 12, **characterized in that** the honeycomb structure includes plural honeycomb units and an adhesive layer joining the honeycomb units.

# FIG.1

# FIG.2

# FIG.3

# FIG.4

M

AMOUNT OF NOBLE
METAL CATALYST

0
$\frac{d}{2}$
d

X

DEPTH FROM CELL WALL SURFACE

121
123
121

d

X

# FIG.5A

**AMOUNT OF NOBLE METAL CATALYST** (vertical axis, M)

$0 \quad p \quad \dfrac{d}{2} \quad d{-}p \quad d$

DISTANCE FROM CELL WALL SURFACE

# FIG.5B

**AMOUNT OF NOBLE METAL CATALYST** (vertical axis, M)

$0 \quad p \quad \dfrac{d}{2} \quad d{-}p \quad d$

DISTANCE FROM CELL WALL SURFACE

# FIG.6

Europäisches
Patentamt

European
Patent Office

Office européen
des brevets

## EUROPEAN SEARCH REPORT

Application Number

EP 08 01 6266

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2007/161509 A1 (BRUGGENDICK HERMANN [DE] ET AL) 12 July 2007 (2007-07-12) * paragraphs [0003] - [0005], [0010], [0014], [0016] - [0018], [0022], [0026], [0028], [0029], [0041] - [0047], [0065] * * figures * | 1-13 | INV. B01D53/86 B01J23/58 B01J35/00 B01J35/04 B01J37/02 |
| Y | | 1-13 | |
| Y | US 2006/292393 A1 (KUNIEDA MASAFUMI [JP]) 28 December 2006 (2006-12-28) * paragraphs [0020], [0023], [0024], [0055] - [0057], [0064], [0081] * * figure 3b * | 1-13 | |
| X | EP 1 779 930 A (NISSAN MOTOR [JP]) 2 May 2007 (2007-05-02) * paragraphs [0005], [0011], [0013], [0028], [0029] * * figure 1b * | 1-13 | |
| X | US 3 897 368 A (OHARA TAKASHI ET AL) 29 July 1975 (1975-07-29) * page 1, left-hand column, lines 4-11 * * page 1, right-hand column, lines 35-42 * * figures * | 1-13 | TECHNICAL FIELDS SEARCHED (IPC) B01D B01J |
| A | EP 1 739 288 A (IBIDEN CO LTD [JP]) 3 January 2007 (2007-01-03) * the whole document * * paragraph [0002] * | 1-13 | |

The present search report has been drawn up for all claims

| Place of search | Date of completion of the search | Examiner |
|---|---|---|
| Munich | 30 July 2009 | Gosselin, Daniel |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 08 01 6266

30-07-2009

| Patent document cited in search report | | | Publication date | Patent family member(s) | | | Publication date |
|---|---|---|---|---|---|---|---|
| US 2007161509 | A1 | | 12-07-2007 | EP | 1797954 | A1 | 20-06-2007 |
| US 2006292393 | A1 | | 28-12-2006 | CN | 1929923 | A | 14-03-2007 |
| | | | | EP | 1852184 | A1 | 07-11-2007 |
| | | | | WO | 2006070540 | A1 | 06-07-2006 |
| | | | | KR | 20080042902 | A | 15-05-2008 |
| EP 1779930 | A | | 02-05-2007 | CN | 1958154 | A | 09-05-2007 |
| | | | | JP | 2007117907 | A | 17-05-2007 |
| | | | | KR | 20070045981 | A | 02-05-2007 |
| | | | | US | 2007099796 | A1 | 03-05-2007 |
| US 3897368 | A | | 29-07-1975 | CA | 1002508 | A1 | 28-12-1976 |
| | | | | DE | 2359772 | A1 | 06-06-1974 |
| | | | | FR | 2208712 | A1 | 28-06-1974 |
| | | | | GB | 1445859 | A | 11-08-1976 |
| | | | | IT | 1013041 | B | 30-03-1977 |
| EP 1739288 | A | | 03-01-2007 | CN | 101076403 | A | 21-11-2007 |
| | | | | WO | 2007000825 | A1 | 04-01-2007 |
| | | | | US | 2006292342 | A1 | 28-12-2006 |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2005063653 A